# FASCICULE DE BREVET EUROPEEN

(11) **EP 1 082 792 B1**
(45) Date de publication et mention de la délivrance du brevet: **28.11.2007**
(21) Numéro de dépôt: 00907624.1
(22) Date de dépôt: 25.02.2000
(51) Int. Cl.: H02G 1/12

(54) **METHODE DE PREPARATION DE CABLES COAXIAUX AVEC UN CONDUCTEUR EXTERIEUR ANNELE, ET OUTIL A CET EFFET**
VORBEREITUNGSVERFAHREN FÜR KOAXIALKABEL MIT EINEM GEWELLTEM AUSSENLEITER, UND WERKZEUG DAFÜR
METHOD FOR PREPARING COAXIAL CABLES WITH AN EXTERNAL RINGED CONDUCTOR, AND TOOL THEREFOR

(30) Priorité: 04.03.1999 BE 9900148
(43) Date de publication de la demande: 14.03.2001
(73) Titulaire: SEE SPRL, 1420 Braine-L'Alleud (BE)
(72) Inventeur: ANDREESCU, Paul, B-1180 Bruxelles (BE)
(74) Mandataire: Leherte, Georges M.L.M.
(86) Numéro de dépôt international: PCT/EP2000/001548
(87) Numéro de publication internationale: WO 2000/052801

(56) Documents cités:
- US-A- 4 729 268
- US-A- 5 511 305
- PATENT ABSTRACTS OF JAPAN vol. 98, no. 9, 31 juillet 1998 (1998-07-31) & JP 10 112914 A (MITSUBISHI CABLE), 28 avril 1998 (1998-04-28)

## Description

Un outil pour la préparation des câbles coaxiaux avec un conducteur extérieur annelé, en vue d'un montage des connecteurs rapide, reproductible et de qualité, doit satisfaire plusieurs exigences :
- Couper le conducteur central, le diélectrique, le conducteur extérieur et la gaine du câble conformément aux prescriptions du connecteur à monter.
- Couper les conducteurs du câble sans faire de bavures ou limailles. Une fine bavure à l'intérieur du conducteur extérieur ou des limailles peuvent générer des intermodulations (généralement désignées par le terme PIM, abréviation de Passive Inter Modulations).
- Assurer automatiquement une préparation précise par rapport à une référence (un sommet ou un creux du conducteur extérieur) indépendamment de la précision avec laquelle le câble est scié.

L'objet de l'invention est notamment un outil qui répond à toutes ces exigences.

le document JP-A-10112914 décrit un outil pour la préparation de câbles coaxiaux munis d'une gaine, d'un conducteur extérieur annelé, d'un conducteur central et d'un diélectrique séparant les deux conducteurs. Cet outil est muni d'un couteau permettant de cisailler la gaine en spirale, et d'une face de butée placée à une telle distance de ce couteau, que, lorsque l'extrémité du câble bute contre ladite face de butée, une longueur prédéterminée de la gaine a été cisaillée et enlevée. Cet outil permet donc d'enlever la gaine jusqu'à une distance déterminée de l'extrémité du câble. Cette préparation est liée à la précision avec laquelle le câble est scié, et n'est donc pas reproductible et précise.

Le but de l'invention est de développer un outil et une méthode de préparation qui assure une préparation reproductible avec une grande précision qui n'est pas liée à la précision avec laquelle le câble a été scié.

Ce but est atteint par un outil selon la revendication 1 et par une méthode selon la revendication 3.

Cet outil et cette méthode assurent que le plan de coupe de chaque couteau supplémentaire se trouve toujours au même endroit par rapport au profil du conducteur extérieur, par exemple toujours dans un creux ou sur un sommet du conducteur extérieur.

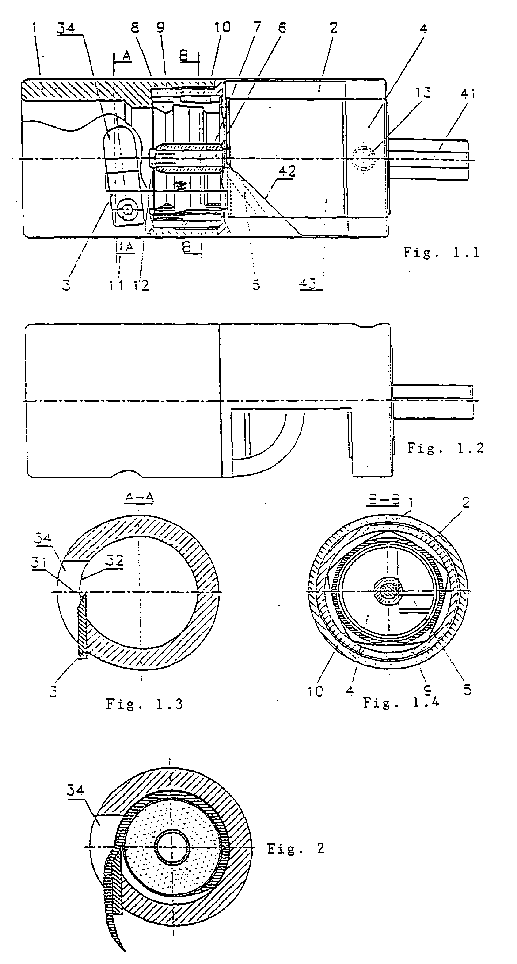

Dans la fig.1 est représenté l'outil pour ce type de câbles ayant un conducteur central creux.

L'outil est composé de l'éplucheur (1) pour la gaine du câble qui porte le couteau (3) fixé avec la vis (11). L'éplucheur (1) est fixé, dans le cas présenté, à l'aide d'un filet, sur le guide (2) du porte-couteau (4). Le porte-couteau (4) est fixé avec la vis (13) et soutient le couteau (5) et l'axe (6) sur lequel peut tourner le guide intérieur (7) assuré avec la vis (12). Suivant les dimensions et les besoins, le porte-couteau et le couteau peuvent être réalisés d'une seule pièce.

Entre le guide (1) et le guide (2) sont logées les bagues fendues (8) et (9) qui peuvent tourner librement l'une par rapport à l'autre et par rapport au ressort (10) et s'écarter tout en étant maintenues dans une position coaxiale avec leur logement par un ressort lamellaire ondulé ou polygonal. Dans le cas présenté le ressort lamellaire (10) est pentagonal.

Pour utiliser l'outil il faut scier le câble perpendiculairement sur son axe et approximativement dans un creux du conducteur extérieur.

Pour préparer, on met l'outil avec le guide de l'éplucheur (1) sur le bout du câble. A l'aide d'une poignée ou d'une foreuse fixée sur la queue (41) du porte-couteau (4) on tourne l'outil dans le sens des aiguilles d'une montre en le poussant légèrement vers le câble. Le couteau (3) est fixé sous un angle d'environ 6° par rapport à un plan perpendiculaire à l'axe de l'outil, ce qui lui permet, suite à la rotation et l'avancement de l'outil, d'évoluer suivant un hélicoïde. Le couteau (3) pénètre dans la gaine du câble et la soulève suivant le plan (31). La gaine est cisaillée entre les arrêtes coupantes déterminées dans le plan de passage entre le guide (1) et le couteau (3) par les surfaces (31) et (32). Le copeau de gaine sort de l'outil à travers le dégagement (34) - fig.2. Quand l'outil avance, le guide intérieur (7) pénètre à l'intérieur du conducteur central du câble et le maintient. Pendant la rotation de l'outil, le guide (7) a un mouvement de roulement sur la surface intérieure du conducteur central du câble ce qui permet de ne pas créer des petites limailles et diminue l'effort pour actionner l'outil.

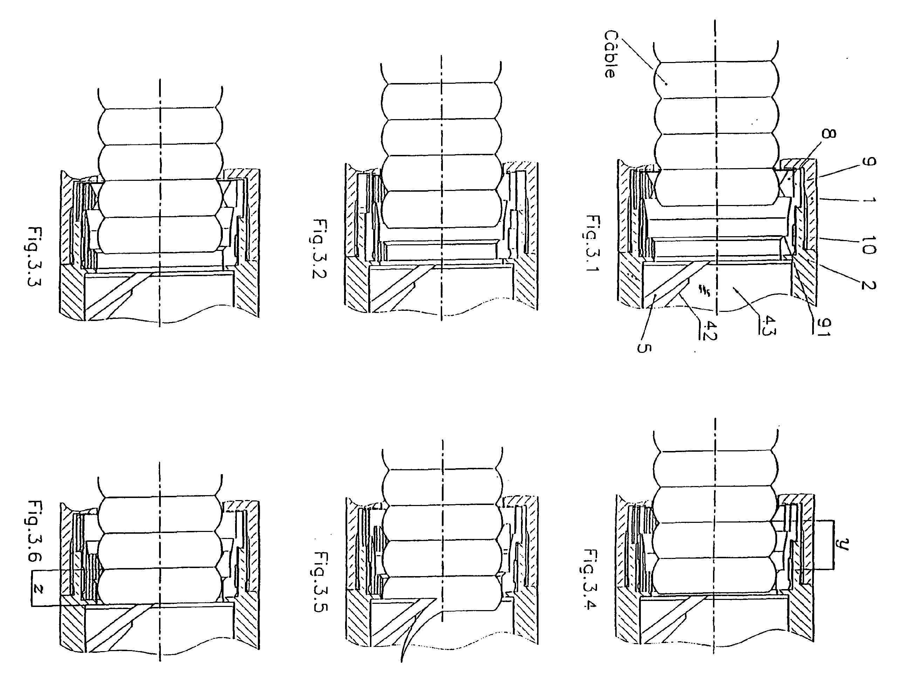

La suite de la préparation est illustrée dans les fig.3.1 à 3.6. Le conducteur extérieur du câble, dénudé, pénètre en dessous de la bague (8), l'écarte, et celle ci écarte à son tour la bague (9). L'élasticité des bagues (8) et (9) combinée avec l'action du ressort (10), les oblige de suivre le contour du conducteur extérieur du câble. Dés que le couteau (5) touche le plan frontal du câble, il coupe les deux conducteurs et le diélectrique. Les copeaux sont dégagés par le couteau (5) et la surface (42) et (43) du porte-couteau (4) et, quand l'outil n'avance plus, on obtient une surface propre sans limailles - fig.3.5 et fig.3.6. Dans la fig.3.4 on voit que la bague (9) est écartée par un sommet tandis que la bague (8) reste serré dans un creux du conducteur extérieur. Ensuite, la bague (8) entraînée par le câble glisse en dessous de la bague (9) - fig.3.5. Quand la bague (8) bute contre l'épaulement (91) à l'intérieur de la bague (9), l'avancement de l'outil sur le câble s'arrête automatiquement. En retirant l'outil après cette préparation, la bague (8) recule en dessous de la bague (9) jusqu'à sa position initiale et s'écarte avec la bague (9) en dégageant le câble. L'ensemble des pièces (8), (9) et (10) revient dans sa position initiale et l'outil est prêt pour une nouvelle préparation.

La préparation du câble, qui est spécifique pour chaque fabricant de connecteurs, peut être réalisée en choisissant les dimensions et la configuration de l'outil.

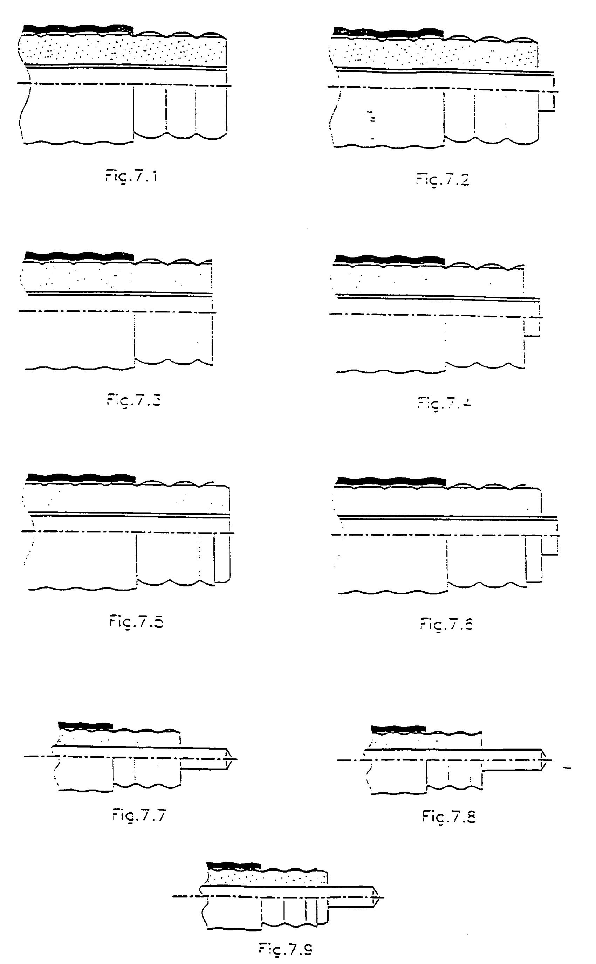

Dans les fig.7.1 à 7.6 sont illustrées des variantes de préparation pour les câbles avec le conducteur central creux.

La longueur d'enlèvement pour la gaine (dénudage du conducteur extérieur) est déterminée par la cote (x) de l'outil - fig.1.
La longueur sur laquelle le conducteur extérieur, le diélectrique et le conducteur central seront coupés (longueur d'enlèvement pour obtenir une coupe propre) est déterminée par la cote (y) de l'outil - fig.3.4.

La coupe des conducteurs et du diélectrique dans un même plan, à l'endroit d'un creux - fig.7.1 ou d'un sommet - fig.7.3, est déterminée par la cote (z) de l'outil - fig.3.6.

En remplaçant le porte-couteau (4) et le couteau (5) avec celui représenté dans la fig. 4, prévu avec deux couteaux (14) et (15), on peut couper le conducteur central du câble décalé par rapport au plan de coupe du diélectrique et du conducteur extérieur - fig.7.2, et fig.7.4. Ce décalage est déterminé par la cote (t) de l'outil - fig.4.

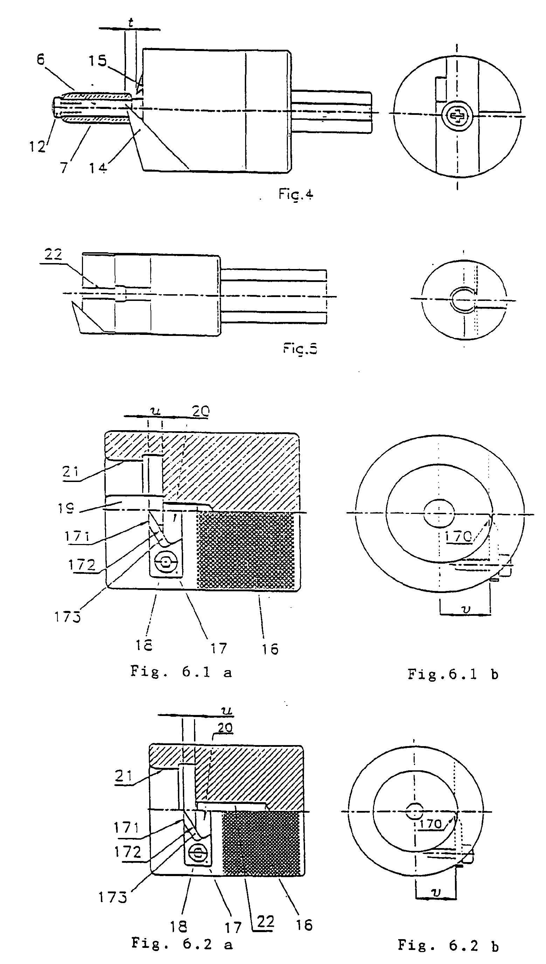

Pour obtenir les préparations illustrées dans les fig.7.5 et 7.6 on peut utiliser un porte-couteau avec trois couteaux. S'il ne faut pas toucher le diélectrique, étant donné que le diamètre extérieur de celui-ci est plus grand en dessous d'un sommet du conducteur extérieur que le diamètre extérieur du conducteur extérieur dans un creux, il faut utiliser un complément de l'outil - l'outil à évaser représenté dans la fig. 6.1.
L'outil à évaser est composé du corps (16), du guide intérieur (19) et du couteau (17) fixé à l'aide de la vis (18) dans la fenêtre de dégagement (20). La cote (v) est supérieure au rayon le plus grand du diélectrique et inférieure au rayon intérieur le plus grand du conducteur extérieur.

En mettant l'outil à évaser sur le câble préparé suivant fig.7.1 ou fig.7.2 on le pousse légèrement en le tournant dans le sens des aiguilles d'une montre. Le guide intérieur (19) s'engage dans le conducteur central et la pointe (170) du couteau (17) pénètre dans le conducteur extérieur. L'arête coupante (171) coupe le conducteur extérieur en l'évasant et l'arrête coupante (172) casse la partie avant du conducteur qui monte sur le plan incliné (173) et est dégagé à travers la fenêtre de dégagement (20). Comme la coupe se fait de l'intérieur vers l'extérieur il ne faut pas utiliser un outil à évaser après cette coupe et la surface intérieure du conducteur extérieur, sur laquelle se fait le contact avec le corps du connecteur, est propre, sans limailles ou bavures. La longueur d'enlèvement du conducteur extérieur par l'outil à évaser (dénudage du_diélectrique) est déterminée par la cote (u) - fig.6.1.

En utilisant un porte-couteau comme celui représenté dans la fig.5, prévu avec un ou plusieurs couteaux suivant le principe déjà décrit et de plus prévu avec un trou axial (22) on peut préparer les câbles ayant un conducteur central plein. Ces préparations sont illustrées dans les fig.7.7 et 7.8. Pour réaliser la préparation illustrée dans la fig.7.9 il faut utiliser, suivant les mêmes principes déjà décrits, l'outil à évaser représenté dans la fig.6.2 sur le câble préparé suivant la fig.7.7. Cette fois-ci le guidage de l'outil à évaser se fait à l'aide de l'alésage (21) sur le conducteur extérieur et de l'alésage (22) sur le conducteur central du câble.

Les inconvénients des outils existants sont le positionnement par rapport au profil du conducteur extérieur du câble et la coupe des conducteurs qui génère des bavures. Ils utilisent soit des lames de cutter qui coupent tout de l'extérieur vers l'intérieur soit des couteaux avec une arrête coupante radiale. Suite à l'usure de la partie coupante de l'outil les bavures deviennent de plus en plus grandes.

Dans le premier cas l'outil serre le conducteur extérieur et forme des bavures vers l'intérieur des deux conducteurs. Pour évaser le conducteur extérieur on utilise une pièce conique qui suit un mouvement de révolution étant poussée entre le conducteur extérieur et le diélectrique. Cette pièce écarte le conducteur extérieur mais la pointe du cône_le griffe en produisant de limailles, blesse le diélectrique et en même temps détache la bavure en la coinçant entre le diélectrique et le conducteur extérieur sur la surface de contact avec le corps du connecteur. Pour ébavurer le conducteur central creux, il faut utiliser un outil coupant conique qui produit des limailles qui peuvent se loger dans le diélectrique.

Dans le deuxième cas le positionnement de la préparation par rapport au profile du conducteur extérieur dépend de la précision avec laquelle le câble a été scié et les bavures dues à la coupe se forment à l'intérieur et à l'extérieur de chaque conducteur et génèrent les mêmes problèmes.

Pour l'outil qui est le sujet de l'invention on utilise des couteaux ayant l'arête coupante parallèle à un rayon et un dégagement particulier des copeaux ce qui permet de choisir la formation des bavures, dues à la coupe du conducteur extérieur, du coté opposé à la surface de contact ce qui rend superflu l'ébavurage.

Ce système permet d'éliminer les bavures pour le conducteur central creux.

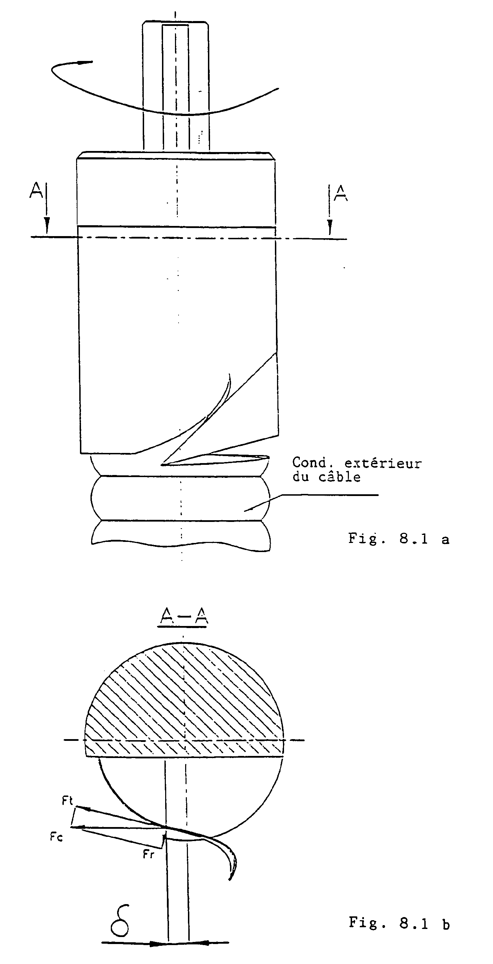

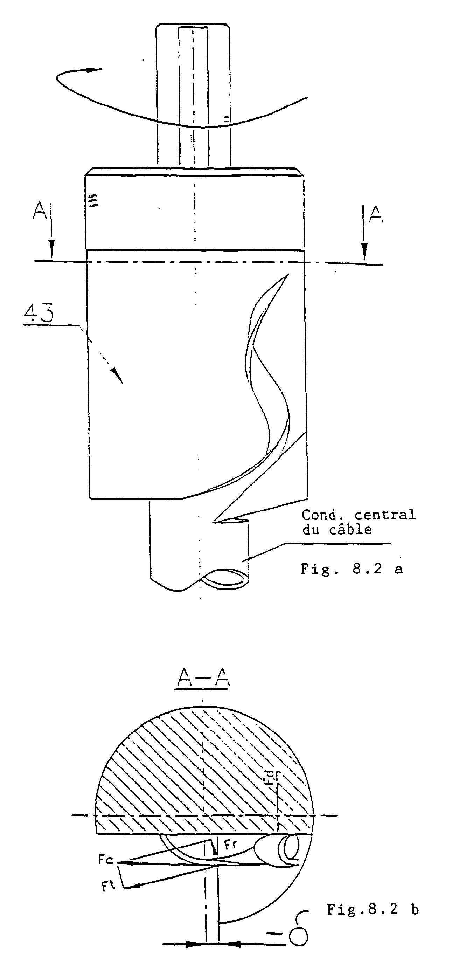

Dans la fig.8.1 est représenté un couteau d'une seule pièce avec le porte-couteau. L'arête coupante du couteau est décalée de (δ) par rapport au rayon. Pour comprendre le fonctionnement on regardera le modèle simplifié de décomposition de la force exercée par l'arrête coupante du couteau dans un plan perpendiculaire à l'axe. En tournant l'outil dans le sens des aiguilles d'une montre, la force Fc sur la paroi du tube qui est le conducteur extérieur du câble, se décompose en Ft suivant une direction tangentielle qui coupe le tube et Fr suivant la direction du rayon qui pousse le copeau de l'intérieur vers l'extérieur. La bavure due à la coupe se forme uniquement sur le bord extérieur du tube et n'intervient pas dans la zone de contact qui se fait à l'intérieur.

La coupe pour le conducteur central creux sans bavures est illustrée dans la fig.8.2. On utilise le même modèle simplifié pour la décomposition de la force exercée par l'arrête coupante du couteau. Cette fois-ci l'arête coupante est décalée de (-δ) par rapport au rayon. La force Fc se décompose en Ft qui coupe le tube et Fr qui pousse le copeau de l'extérieur vers l'intérieur. Au fur et à mesure que le copeau se forme, il s'enroule et s'appuie sur la surface de dégagement (43) du couteau. La force Fd exercée par la surface (43) pousse le copeau vers l'extérieur qui, due à sa rigidité plus grande que celle du conducteur extérieur, évase le tube dans la zone de coupe. Suite à la force exercée par l'arête coupante ayant une composante de l'extérieur vers l'intérieur et à la force d'évasement exercée par la surface de dégagement dans la zone de coupe, la coupe du tube se fait pratiquement sans bavures. La conclusion est que suite à un choix judicieux du décalage de l'arête coupante du couteau par rapport au rayon on peut choisir le coté de la paroi du tube ou les bavures vont se former ou, dans certains cas, les éliminer.

L'invention présente les avantages suivants :
- Préparation reproductible avec une grande précision qui n'est pas liée à la précision avec laquelle le câble a été scié.
- Positionnement automatique, de la préparation, par rapport au profile du conducteur extérieur du câble.
- Positionnement indépendant de la variation du profil du conducteur extérieur suivant le fabriquant du câble.
- Coupe sans bavures.
- L'outil permet, dans les cas ou on ne peut éliminer les bavures que d'un côté de la paroi du conducteur, de choisir que le côté, sans bavures soit le côté de contact.
- Possibilité d'utiliser le même principe pour plusieurs préparations différentes.

## Revendications

1. Outil pour la préparation de câbles coaxiaux munis d'une gaine, d'un conducteur extérieur annelé, d'un conducteur central et d'un diélectrique séparant le conducteur extérieur et le conducteur central, comprenant un couteau (3) permettant de cisailler la gaine **caractérisé en ce que** l'outil comprend
- un guide (7)pouvant prendre appui sur le conducteur central
- un ou plusieurs couteau(x) supplémentaires (5), respectivement (14), (15), permettant de couper le conducteur extérieur, le diélectrique et le conducteur intérieur, respectivement le conducteur intérieur et le diélectrique d'une part, et le conducteur extérieur d'autre part;
- un dispositif de positionnement et de butée (8), (9),10) permettant un positionnement automatique du câble par rapport au(x) couteau(x) supplémentaire(s) (5), (14), (15), tel que le(s) plan(s) de coupe de ce(s) couteau(x) se trouve(nt) dans une position prédéterminée par rapport au profil du conducteur extérieur.

2. Outil pour la préparation de câbles coaxiaux selon la revendication 1, **caractérisé en ce qu'**il est muni d'un outil d'évasement pour traiter le conducteur extérieur.

3. Méthode de préparation de câbles coaxiaux munis d'une gaine, d'un conducteur extérieur annelé, d'un conducteur central et d'un diélectrique séparant le conducteur extérieur et le conducteur central, par mise à longueur du conducteur extérieur, du diélectrique et du conducteur central, **caractérisé en ce que**
- l'on coupe le câble perpendiculairement à son axe, en une position déterminée approximativement par rapport à un creux du conducteur extérieur;
- qu'à l'aide d'un outil muni d'un couteau (3), on cisaille la gaine, par rotation en un mouvement hélicoïdal, tandis qu'un guide (7) de l'outil prend appui sur le conducteur central,
- que, sous l'action d'un dispositif de positionnement et de butée (8), (9), (10) de l'outil, le câble est positionné automatiquement par rapport à au moins un couteau supplémentaire (5),14), (15) de l'outil, tel que le(s) plan(s) de coupe de ce(s) couteau(x) se trouve(nt) dans une position prédéterminée par rapport au profil du conducteur extérieur,
- que l'on coupe le conducteur extérieur, le diélectrique et le conducteur intérieur à l'aide de ce(s) couteau(x) supplémentaire(s) (5), 14), (15), et
- qu'éventuellement on traite le conducteur extérieur à l'aide d'un outil d'évasement.

## Claims

1. Tool for preparing coaxial cables that have a sheath, an external ringed conductor, a central conductor and a dielectric separating the external conductor from the central conductor, comprising a blade (3) for shearing the sheath, said tool being **characterized in that** it comprises:
- a guide (7) able to rest on the central conductor;
- a supplementary blade (5) for cutting the external conductor, dielectric and internal conductor, or supplementary blades (14) and (15) for cutting the internal conductor and dielectric on the one hand, and the external conductor on the other; and
- a positioning and limiting device (8), (9), (10) for automatically positioning the cable relative to the supplementary blade or blades (5), (14) and (15), such that the cutting plane or planes of said blade or blades is or are in a predetermined position relative to the profile of the external conductor.

2. Tool for preparing coaxial cables according to Claim 1, **characterized in that** it is provided with a flaring tool for preparing the external conductor.

3. Method for preparing coaxial cables that have a sheath, an external ringed conductor, a central conductor and a dielectric separating the external conductor from the central conductor, by exposing the correct lengths of external conductor, dielectric and central conductor, said method being
**characterized in that**:
- the cable is cut at right angles to its axis, at a position determined approximately relative to a trough of the external conductor;
- a tool having a blade (3) is used to shear the sheath in a helical rotational movement, while a tool guide (7) rests on the central conductor,
- under the action of a tool positioning and limiting device (8), (9), (10), the cable is positioned automatically relative to at least one supplementary blade (5), (14) and (15) of the tool, such that the cutting plane or planes of said blade or blades is or are in a predetermined position relative to the profile of the external conductor,
- the external conductor, dielectric and internal conductor are cut by said supplementary blade or blades (5), (14) and (15), and
- the external conductor is optionally processed with a flaring tool.

## Patentansprüche

1. Werkzeug zur Vorbereitung von Koaxialkabeln, die einen Mantel, einen ringgewellten Außenleiter, einen Innenleiter sowie ein Außen- und Innenleiter trennendes Dielektrikum aufweisen, das ein Messer (3) zum Schneiden des Mantels umfasst, **dadurch gekennzeichnet, dass** das Werkzeug Folgendes umfasst:
- eine auf dem Innenleiter abstützbare Führung (7),
- ein oder mehrere Zusatzmesser (5) bzw. (14), (15) zum Schneiden des Außenleiters, des Dielektrikums und des Innenleiters, bzw. des Innenleiters und des Dielektrikums einerseits und des Außenleiters andererseits;
- eine Positionierungs- und Stoppvorrichtung (8), (9), (10) zum automatischen Positionieren des Kabels in Bezug auf das/die Zusatzmesser (5), (14), (15), so dass sich die Schnittebene(n) des Messers/der Messer bezogen auf das Außenleiterprofil in einer vorbestimmten Position befindet/befinden.

2. Werkzeug zur Vorbereitung von Koaxialkabeln nach Anspruch 1, **dadurch gekennzeichnet, dass** es mit einem Ausweitungswerkzeug zum Bearbeiten des Außenleiters versehen ist.

3. Verfahren zur Vorbereitung von Koaxialkabeln, die einen Mantel, einen ringgewellten Außenleiter, einen Innenleiter sowie ein Außen- und Innenleiter trennendes Dielektrikum aufweisen, durch Ablängen des Außenleiters, Dielektrikums und Innenleiters, **dadurch gekennzeichnet, dass**
- das Kabel senkrecht zu seiner Achse in einer annähernd in Bezug auf ein Wellental des Außenleiters bestimmten Position geschnitten wird;
- der Mantel mithilfe eines mit einem Messer (3) versehenen Werkzeugs durch Drehung in einer spiralförmigen Bewegung geschnitten wird, während eine Führung (7) des Werkzeugs sich auf den Innenleiter stützt,
- das Kabel unter Einwirkung einer Positionierungs- und Stoppvorrichtung (8), (9), (10) des Werkzeugs in Bezug auf mindestens ein Zusatzmesser (5), (14), (15) automatisch positioniert wird, so dass sich die Schnittebene/n des Messers/der Messer in einer in Bezug auf das Außenleiterprofil vorbestimmten Position befindet/befinden,
- der Außenleiter, das Dielektrikum und der Innenleiter mithilfe des Zusatzmessers/der Zusatzmesser (5), (14), (15) geschnitten werden und
- der Außenleiter gegebenenfalls mithilfe eines Ausweitungswerkzeugs bearbeitet wird.
